# EUROPEAN PATENT APPLICATION

(11) **EP 1 437 788 A2**
(43) Date of publication of application: **14.07.2004**
(21) Application number: 03023828.1
(22) Date of filing: 20.10.2003
(51) Int. Cl.: H01M 8/24, H01M 8/02, H01M 8/10

(54) **Stacked fuel cell and method for its maintenance**

(30) Priority: 08.01.2003 JP 2003001834
(71) Applicant: Mitsubishi Heavy Industries, Ltd., Tokyo (JP)
(72) Inventor: Kobayashi, Toshiro, Mitsubishi Heavy ind., Ltd., Nishi-ku Hiroshima-shi Hiroshima (JP); Moriga, Takuya, Mitsubishi Heavy ind., Ltd., Nishi-ku Hiroshima-shi Hiroshima (JP); Ito, Hideki, Mitsubishi Heavy ind., Ltd., Nishi-ku Hiroshima-shi Hiroshima (JP); Kajiwara, Tomoyuki, Mitsubishi Heavy ind., Ltd., Nishi-ku Hiroshima-shi Hiroshima (JP); Yamada, Tamotsu, Mitsubishi Heavy ind., Ltd., Nishi-ku Hiroshima-shi Hiroshima (JP)
(74) Representative: Henkel, Feiler & Hänzel

(57) **Abstract**

A stacked fuel cell comprises a plurality of cell films (11) and a plurality of separators (12) stacked alternately. The cell films (11) each comprise a solid polymer electrolyte film sandwiched between electrode films made of graphite, while the separators (12) are electrically conductive graphite separators each having a fuel gas channel formed in one surface thereof, and an oxidant gas channel formed in the other surface thereof. In the stacked fuel cell, a plurality of partition plates (18) are interposed with predetermined spacing in the direction of stacking. The partition plates (18) each have an electrically conductive graphite terminal board (16) having a groove (16a) formed as a piercing portion, through which a band-shaped fastener (19) made of resin (for example, polypropylene) is passed in a direction perpendicular to the direction of stacking, and an electrically conductive graphite end separator (17) having a gas channel formed in a surface thereof in contact with the cell film (11).

## Description

### Technical Field

This invention relates to a stacked fuel cell and a method for its maintenance.

### Background Art

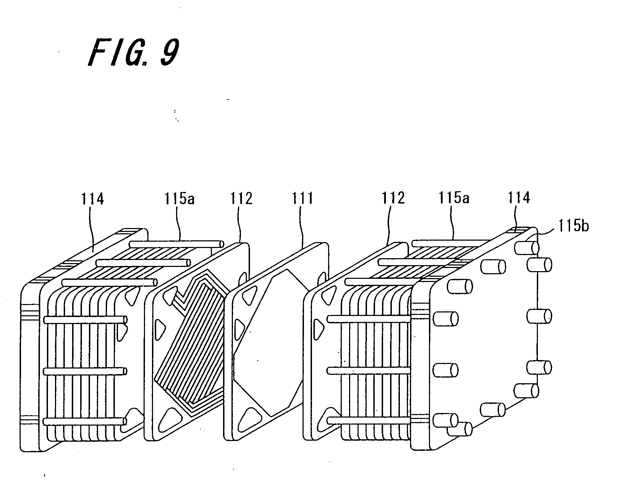

A stacked fuel cell has a structure as shown, for example, in FIG. 9, which comprises many cell films 111 and many separators 112 stacked alternately, the cell films 111 each comprising a solid polymer electrolyte film sandwiched between electrode films, and the separators 112 each having electrical conductivity and having a fuel gas channel formed in one surface thereof and an oxidant gas channel formed in the other surface thereof; and in which the periphery of the resulting stack is clamped by threaded shafts 115a and nuts 115b via end plates 114 . This stacked fuel cell is designed such that a fuel gas, such as hydrogen, is supplied, and also an oxidant gas, such as air, is supplied, through manifolds formed in the end plates 114 and separators 112, and that upon supply of these gases, the fuel gas is fed to one surface of the cell film 111 via the fuel gas channel on the one surface of the separator 112, while the oxidant gas is fed to the other surface of the cell film 111 via the oxidant gas channel on the other surface of the separator 112, whereby the fuel gas and the oxidant gas react electrochemically to output electric power to the outside.

If any of the cell films 111, for example, is damaged for some cause and needs to be replaced in the stacked fuel cell having the above-described structure, the threaded shafts 115a and the nuts 115b are detached, and the damaged cell film 111 is replaced by a new cell film 111, whereafter the cell films 111 and the separators 112 are clamped again by the threaded shafts 115a and the nuts 115b via the end plates 114. In this manner, maintenance and management are performed.

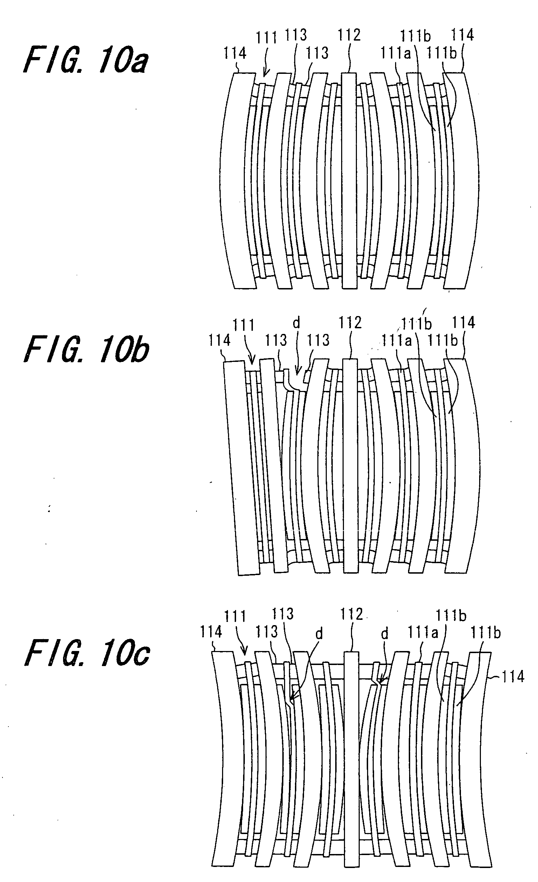

However, the stacked fuel cell has the aforementioned structure whose periphery is clamped by the threaded shafts 115a and the nuts 115b via the end plates 114. As shown in FIG. 10(a), therefore, the stacked fuel cell under a compressive force is warped like a convex lens, and a peripheral edge portion of the solid polymer electrolyte film 111a protruding from the peripheral edges of the electrode films 111b is brought into intimate contact with a seal material 113. When the clamping is released, the solid polymer electrolyte film 111a in intimate contact with the seal material 113 is pulled under a restoring force, with the result that a site of damage, d, such as breakage, may newly occur, as shown in FIG. 10(b).

To prevent warpage in the form of a convex lens during clamping, the seal material 13 maybe thick-walled. Even in this case, when the clamping is released, the stacked fuel cell is warped like a concave lens, as shown in FIG. 10 (c). As a result, the same risk as mentioned above occurs. That is, the solid polymer electrolyte film 111a in intimate contact with the seal material 113 is pulled, whereby a site of damage, d, such as breakage, may newly appear.

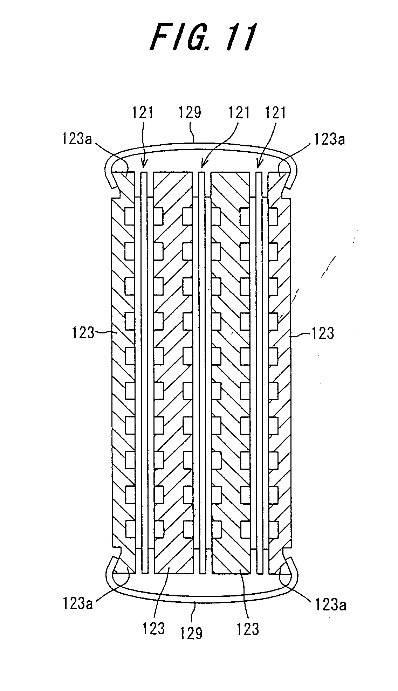

Thus, as shown, for example, in FIG. 11, an engagement portion 123a is formed at the peripheral edge of a separator 123, and is connected to the engagement portion 123a formed in other separator 123 by a spring 129, thus making it possible to release clamping of only a portion in the vicinity of a damaged cell film 121 or the like. By this means, it is attempted to prevent damage to other normal cell films 121 or the like (see, for example, U.S. Patent 5,686,200 and Japanese Unexamined Patent Publication No. 1995-29592).

However, graphite is used for the separator 112 or 123 from the point of view of chemical stability and electrical properties. Thus, if the peripheral edges of the separators are connected together, cracking may occur. Moreover, very many separators 123 have to be connected together by a plurality of springs 129. Thus, the number of the components mounted is very large, and a mounting operation is laborious. Furthermore, the spring 129 is provided at the peripheral edge of the separator 123. Hence, the size of the entire structure is so large that a dead space tends to be created.

### Summary of the Invention

The present invention has been accomplished in the light of the above-mentioned circumstances. It is the object of the invention to provide a stacked fuel cell and a method for its maintenance, which can not only prevent cracking of a separator or occurrence of a dead space, but also operate easily with a small number of components.

A stacked fuel cell according to a first aspect of the present invention, for attaining the above-mentioned object, is a stacked fuel cell comprising:
a plurality of cell films and a plurality of separators stacked alternately, the cell films each comprising a solid polymer electrolyte film sandwiched between electrode films, and the separators each being electrically conductive and each having a fuel gas channel formed in one surface thereof, and an oxidant gas channel formed in other surface thereof, characterized in that
a plurality of partition plates are interposed with predetermined spacing in a direction of stacking, the partition plates each being electrically conductive and each having a piercing portion, through which a line-shaped or band-shaped fastener is passed in a direction perpendicular to the direction of stacking.

A stacked fuel cell according to a second aspect of the invention is the stacked fuel cell according to the first aspect of the invention, characterized in that a gas channel is formed in a surface of the partition plate in contact with the electrode film.

A stacked fuel cell according to a third aspect of the invention is the stacked fuel cell according to the second aspect of the invention, characterized in that the partition plate comprises an end separator having the gas channel formed therein, and a terminal board having the piercing portion formed therein.

A stacked fuel cell according to a fourth aspect of the invention is the stacked fuel cell according to any one of the first to third aspects of the invention, further characterized by the fastener which passes through the piercing portion of the partition plate and fastens the cell films and the separators interposed between the partition plates.

Amethod for maintenance of the stacked fuel cell according to a fifth aspect of the invention, for attaining the aforementioned object, is a method for maintenance of the stacked fuel cell according to any one of the first to third aspects of the invention, characterized in that:
in order that except for the cell films and the separators between the partition plates having the targeted cell film or separator interposed therebetween, the remaining cell films and separators will be fastened by the fastener, the fastener is passed through the piercing portions of the partition plates and used for fastening, whereafter the cell films and the separators between the partition plates having the targeted cell film or separator interposed therebetween are detached.

Amethod for maintenance of the stacked fuel cell according to a sixth aspect of the invention is the method for maintenance of the stacked fuel cell according to the fifth aspect of the invention, characterized in that:
in order that the cell films and the separators between the partition plates having the targeted cell film or separator interposed therebetween will be fastened by the fastener, the fastener is passed through the piercing portions of the partition plates and used for fastening, whereafter the cell films and the separators between the partition plates having the targeted cell film or separator interposed therebetween are detached.

### Brief Description of the Drawings

The present invention will become more fully understood from the detailed description given hereinbelow and the accompanying drawings which are given by way of illustration only, and thus are not limitative of the present invention, and wherein:

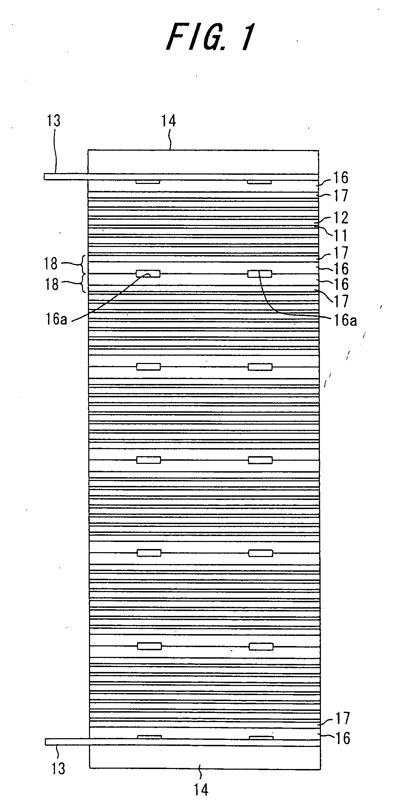

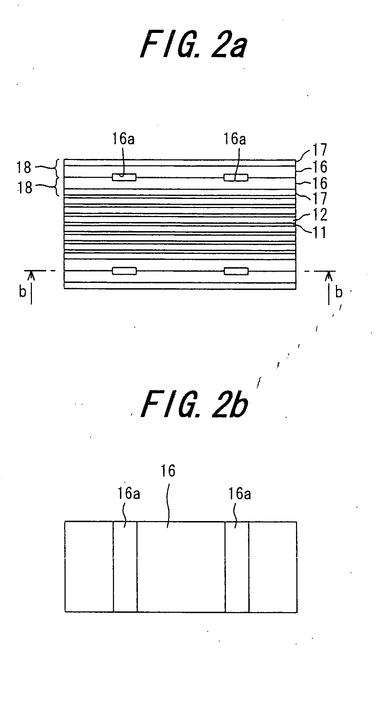

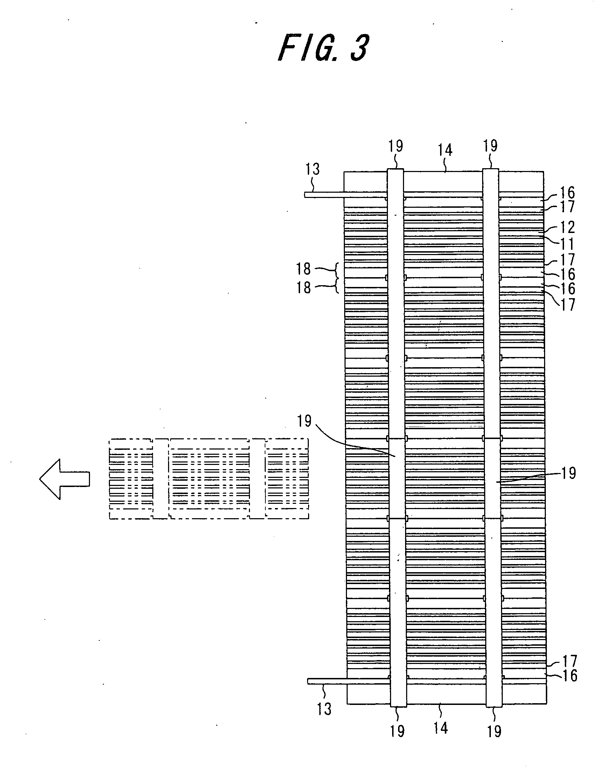

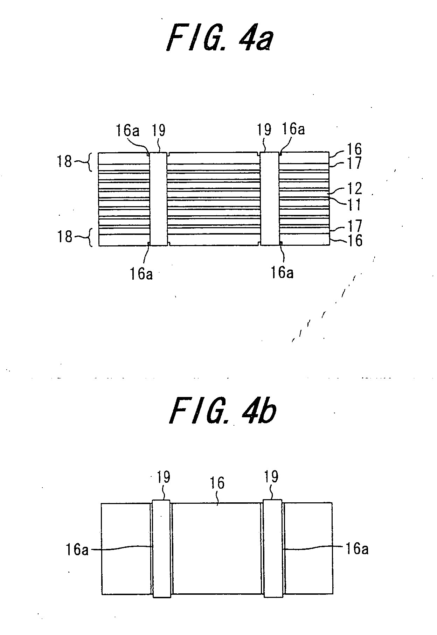

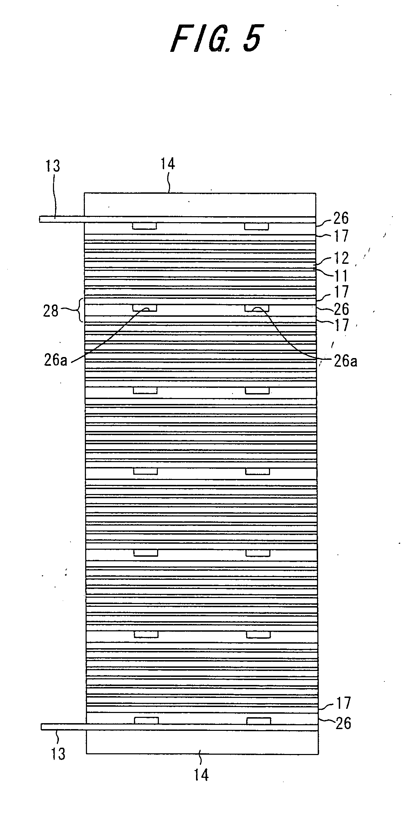

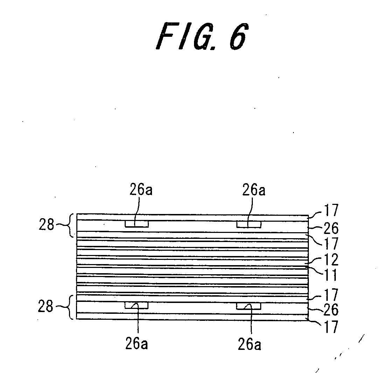

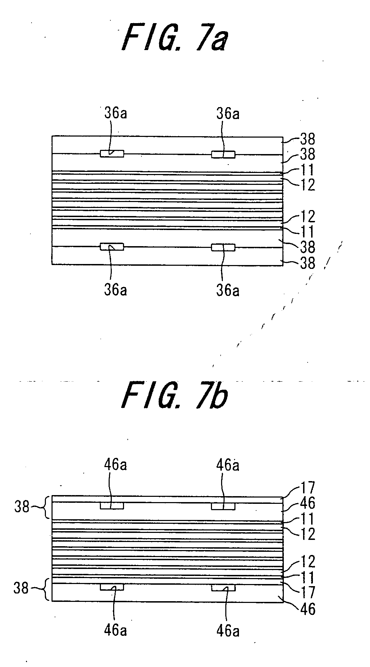

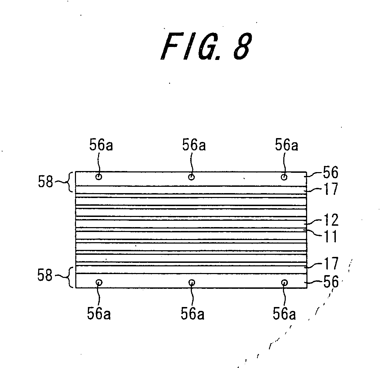

FIG. 1 is a schematic configurational view of a first embodiment of the stacked fuel cell according to the present invention; FIGS. 2(a) and 2(b) are partially extracted enlarged views of FIG. 1; FIG. 3 is an explanation drawing of a method for maintenance of the stacked fuel cell of FIG. 1; FIGS. 4 (a) and 4 (b) are partially extracted enlarged views of FIG. 3; FIG. 5 is a schematic configurational view of a second embodiment of the stacked fuel cell according to the present invention; FIG. 6 is a partially extracted enlarged view of FIG. 5; FIGS. 7(a) and 7(b) are extracted enlarged views of essential parts of other embodiments of the stacked fuel cell according to the present invention; FIG. 8 is an extracted enlarged view of essential parts of still another embodiment of the stacked fuel cell according to the present invention; FIG. 9 is a schematic configurational view of an example of a conventional stacked fuel cell; FIGS. 10(a), 10(b) and 10(c) are explanation drawings of problems with the stacked fuel cell of FIG. 9; and FIG. 11 is an extracted enlarged view of essential parts of another example of the conventional stacked fuel cell.

### Detailed Description

Preferred embodiments of a stacked fuel cell and a method for its maintenance, according to the present invention, will now be described in detail by reference to the accompanying drawings, but in no way limit the invention.

### [First Embodiment]

A first embodiment of the stacked fuel cell and a method for its maintenance, according to the present invention, will be described with reference to FIGS. 1 to 4(a), 4(b). FIG. 1 is a schematic configurational view of the stacked fuel cell. FIGS. 2 (a) and 2 (b) are partially extracted enlarged views of FIG. 1. FIG. 3 is an explanation drawing of a method for maintenance of the stacked fuel cell. FIGS. 4(a) and 4(b) are partially extracted enlarged views of FIG. 3.

The stacked fuel cell according to the present embodiment, as shown in FIG. 1 to FIGS. 4 (a) and 4 (b) , comprises a plurality of cell films 11 and a plurality of separators 12 stacked alternately. The cell films 11 each comprise a solid polymer electrolyte film sandwiched between electrode films made of graphite, while the separators 12 are electrically conductive graphite separators each having a fuel gas channel formed in one surface thereof, and an oxidant gas channel formed in the other surface thereof. In the stacked fuel cell, a plurality of partition plates 18 are interposed with predetermined spacing in the direction of stacking. The partition plates 18 each have an electrically conductive graphite terminal board 16 having a groove 16a formed as a piercing portion, through which a band-shaped fastener 19 made of resin (for example, polypropylene) is passed in a direction perpendicular to the direction of stacking, and an electrically conductive graphite end separator 17 having a gas channel formed in a surface thereof in contact with the cell film 11.

The partition plates 18 are interposed in pairs such that the terminal boards 16 are adjacent to each other, and the groove 16a (two of the grooves 16a in the present embodiment) is formed in the adjacent surfaces of the adj acent terminal boards 16 so that the band-shaped fastener 19 can be inserted through the groove 16a.

In FIGS. 1 and 3, the numeral 13 denotes a current collector made of graphite, and the numeral 14 denotes a metallic end plate. In the stacked fuel cell, a seal material (not shown) is interposed between peripheral edge portions of the above-mentioned members 11 to 14, 16 and 17, and the area between the peripheral edges of the end plates 14, as a pair, is clamped by a plurality of threaded shafts and a plurality of nuts (neither shown) , the threaded shafts piercing through this area.

In this stacked fuel cell, a fuel gas, such as hydrogen, is supplied, and also an oxidant gas, such as air, is supplied, through manifolds formed in the end plates 14, current collectors 13, separators 12, and partition plates 18. Upon supply of these gases, the fuel gas is fed to one surface of the cell film 11 via the fuel gas channel formed in the separator 12 and the end separator 17 of the partition plate 18, while the oxidant gas is fed to the other surface of the cell film 11 via the oxidant gas channel formed in the separator 12 and the end separator 17 of the partition plate 18, whereby the fuel gas and the oxidant gas react electrochemically to output electric power to the outside.

If any of the cell films 11 or the separators 12, for example, is damaged for some cause and needs to be replaced in the stacked fuel cell according to the present embodiment, the following procedure as shown in FIGS. 3 and 4(a), 4(b) is carried out: In order that except for the cell films 11 and the separators 12 between the partition plates 18 having the targeted damaged cell film 11 or separator 12 interposed therebetween, the remaining normal cell films 11 and separators 12 will be fastened by the fastener 19, the fastener 19 is passed through the grooves 16a of the terminal boards 16 of the partition plates 18 and used for fastening. Also, in order that the cell films 11 and the separators 12 between the partition plates 18 having the targeted damaged cell film 11 or separator 12 interposed therebetween will be fastened by the fastener 19, the fastener 19 is passed through the grooves 16a of the terminal boards 16 of these partition plates 18 and used for fastening.

Then, the threaded shafts and the nuts are detached. Also, the cell films 11 and the separators 12 between the partition plates 18 fastened by the fastener 19, while having the targeted damaged cell film 11 or separator 12 interposed therebetween, are detached, and the damaged cell film 11 or the like is replaced by a new cell film 11 or the like. Then, the new'cell film 11 or the like is inserted again into the detached cell films 11 and separators 12, which are then clamped again by the threaded shafts and the nuts via the end plates 14. In this manner, maintenance and management can be performed.

According to the present embodiment, therefore, the following effects can be obtained:
(1) Since the band-shaped fastener 19 is used for fastening, maintenance and management can be performed without causing damage, such as cracking, even though the various members 12, 13, 18 including the separators 12 are formed of graphite.
(2) The stacked fuel cell can be assembled simply by stacking the partition plates 18 with predetermined spacing, in combination with the cell films 11 and separators 12. Moreover, the necessary corrective steps are merely to fasten together the cell films 11 and the separators 12 between the partition plates 18 having the targeted damaged cell film 11 or separator 12 interposed therebetween, and to fasten together the cell films 11 and the separators 12 between the other partition plates 18 which are located on one side and the other side of those fastened above. Thus, the number of components assembled can be markedly decreased, and time and labor for maintenance work can be markedly diminished.
(3) Since the band-shaped fastener 19 is used for fastening, upsizing of the entire structure can be curtailed, and occurrence of a dead space can be avoided.

### [Second Embodiment]

A second embodiment of the stacked fuel cell and a method for its maintenance, according to the present invention, will be described with reference to FIGS. 5 and 6. FIG. 5 is a schematic configurational view of the stacked fuel cell, and FIG. 6 is a partially extracted enlarged view of FIG. 5. For the same portions as in the aforementioned first embodiment, an explanation overlapping the explanation in the first embodiment will be omitted by using the same numerals as used in the explanation offered in the first embodiment.

The stacked fuel cell according to the present embodiment, as shown in FIGS. 5 and 6, comprises a plurality of cell films 11 and a plurality of separators 12 stacked alternately. In the stacked fuel cell, a plurality of partition plates 28 are interposed with predetermined spacing in the direction of stacking. The partition plates 28 each have an electrically conductive graphite terminal board 26 having a groove 26a formed as a piercing portion, through which a fastener 19 is passed in a direction perpendicular to the direction of stacking, and electrically conductive graphite end separators 17 each having a gas channel formed in a surface thereof in contact with the cell film 11.

The partition plates 28 are interposed at predetermined intervals such that the terminal board 26 is sandwiched between a pair of the end separators 17, and the groove 26a (two of the grooves 26a in the present embodiment) is formed in the surface of the terminal board 26 adjacent to one of the end separators 17 so that two of the band-shaped fasteners 19 can be inserted through the grooves 26a.

That is, the partition plates 18 in the aforementioned first embodiment are disposed such that two of the terminal boards 16 and two of the end separators 17 are interposed, with the terminal boards 16 located adjacent to each other. The partition plates 28 in the present embodiment, on the other hand, are disposed such that the single terminal board 26 is sandwiched between two of the end separators 17.

In this stacked fuel cell according to the present embodiment, maintenance and management can be performed in the same manner as in the aforementioned first embodiment.

According to the present embodiment, therefore, it goes without saying that the same effects as in the aforementioned first embodiment can be obtained. Besides, the number of components assembled canbe further decreased, and upsizing of the entire structure can be further curtailed, in comparison with the first embodiment.

### [Other Embodiments]

In the aforementioned first and second embodiments, the area between the peripheral edges of the end plates 13, as a pair, is clamped by a plurality of threaded shafts and a plurality of nuts (neither shown) , the threaded shafts piercing through the area. However, the area between the end plates 13 may be clamped by wrapping a metallic belt, instead of by the threaded shafts and nuts.

In the aforementioned first embodiment, moreover, the application of the partition plate 18 having the terminal board 16 and the end separator 17 is explained. However, as shown, for example, in FIG. 7(a), the application of a partition plate 38, consisting of a terminal board and an end separator integrated, makes it possible not only to obtain the same effects as in the first embodiment, but also to further decrease the number of components assembled, and further curtail upsizing of the entire structure, in comparison with the second embodiment.

In the aforementioned second embodiment, furthermore, the application of the partition plate 28 comprising the single terminal board 26 sandwiched between the two end separators 17 is explained. However, as shown, for example, in FIG. 7 (b) , the application of a partition plate 38, in which a terminal board 46 comprises one of end separators integrated to a terminal board and thus there is only one end separator 17, makes it possible not only to obtain the same effects as in the first embodiment, but also to further decrease the number of components assembled, and further curtail upsizing of the entire structure, in comparison with the second embodiment.

In the aforementioned first embodiment, the partition plate 18 having the terminal board 16 having the groove 16a formed therein is applied. As shown in FIG. 8, however, it is possible to apply a partition plate 58 having the aforesaid end separator 17 and an electrically conductive graphite terminal board 56 having a hole 56a (3 of the holes 56a in the present embodiment) formed as a piercing portion, through which a line-shaped fastener, such as a string or a rope, is passed in a direction perpendicular to the direction of stacking. Of course, the above hole can be applied, instead of the aforesaid groove 26a, 36a or 46a, in the aforementioned second embodiment and above-mentioned other embodiments.

In the aforementioned first and second embodiments and above-mentioned other embodiments, the formation of two each of the grooves 16a, 26a, 36a and 46a is explained. However, this is not restrictive in the present invention, and the number of such grooves may be one or three or more. Similarly, three of the holes 56a are formed in the above-mentioned other embodiment. However, this is not restrictive in the present invention, and one or two or four or more of the holes can be applied.

In the aforementioned first and second embodiments, in order that except for the cell films 11 and the separators 12 between the partition plates 18 having the targeted damaged cell film 11 or separator 12 interposed therebetween, the remaining normal cell films 11 and separators 12 will be fastened by the fastener 19, the fastener 19 is passed through the grooves 16a of the terminal boards 16 of the partition plates 18 and used for fastening. Also, in order that the cell films 11 and the separators 12 between the partition plates 18 having the targeted damaged cell film 11 or separator 12 interposed therebetween will be fastened by the fastener 19, the fastener 19 is passed through the grooves 16a of the terminal boards 16 of these partition plates 18 and used for fastening. Then, the cell films 11 and the separators 12 between the partition plates 18 fastened by the fastener 19, while having the targeted damaged cell film 11 or separator 12 interposed therebetween, are detached. However, it is possible, for example, to detach the cell films 11 and the separators 12 between the partition plates 18, which have the targeted damaged cell film 11 or separator 12 interposed therebetween, without fastening by the fastener 19 the cell films 11 and the separators 12 between the partition plates 18 having the targeted damaged cell film 11 or separator 12 interposed therebetween'.

In partially repairing the detached cell films 11 or separators 12, it is preferred to take the former step stated above. In entirely repairing (overhauling) or discarding the detached cell films 11 or separators 12, it is preferred to take the latter step stated above.

In the aforementioned first and second embodiments, the fastener 19 is used for fastening when performing maintenance work. However, the cell films 11 and the separators 12 interposed between the partition plates 18 or 28 can be assembled beforehand, for each combination of the cell films 11 and the separators 12, by fastening with the fastener 19. Then, at the time of performing maintenance work, it is possible to detach the cell films 11 and the separators 12 between the partition plates 18 or 28, which have been fastened by the fastener 19 while having the targeted damaged cell film 11 or separator 12 interposed therebetween.

The stacked fuel cell according to the first aspect of the invention can prevent cracking of the separator and occurrence of a dead space, and can also easily undergo maintenance work with a small number of components.

In the stacked fuel cell according to the second aspect of the invention, the cell film in contact with the partition plate can also generate power.

The stacked fuel cell according to the third aspect of the invention can facilitate the production of the partition plate.

The stacked fuel cells according to the fourth aspect of the invention give the following advantages: Maintenance work requires only the detachment and replacement of the cell films and separators between the partition plates fastened by the fastener while having the targeted cell film or separator interposed therebetween. Thus, maintenance work canbe facilitated further.

The method for maintenance of the stacked fuel cell according to the fifth aspect of the invention can prevent cracking of the separator and occurrence of a dead space, and can also perform maintenance work easily with a small number of components.

The method for maintenance of the stacked fuel cell according to the sixth aspect of the invention can further facilitate maintenance work.

While the present invention has been described in the foregoing fashion, it is to be understood that the invention is not limited thereby, but may be varied inmanyotherways. Suchvariationsarenottoberegarded as a departure from the spirit and scope of the invention, and all such modifications as would be obvious to one skilled in the art are intended to be included within the scope of the appended claims.

## Claims

1. A stacked fuel cell comprising:
a plurality of cell films (11) and a plurality of separators (12) stacked alternately, said cell films (11) each comprising a solid polymer electrolyte film sandwiched between electrode films, and said separators (12) each being electrically conductive and each having a fuel gas channel formed in one surface thereof, and an oxidant gas channel formed in other surface thereof, **characterized in that**
a plurality of partition plates (18, 28, 38, 58) are interposed with predetermined spacing in a direction of stacking, said partition plates (18, 28, 38, 58) each being electrically conductive and each having a piercing portion (16a, 26a, 36a, 46a, 56a), through which a line-shaped or band-shaped fastener (19) is passed in a direction perpendicular to said direction of stacking.

2. The stacked fuel cell according to claim 1, **characterized in that** a gas channel is formed in a surface of said partition plate (18, 28, 38, 58) in contact with said electrode film.

3. The stacked fuel cell according to claim 2, **characterized in that** said partition plate (18, 28, 38, 58) comprises an end separator (17) having said gas channel formed therein, and a terminal board (16, 26, 46, 56) having saidpiercingportion (16a, 26a, 36a, 46a, 56a) formed therein.

4. The stacked fuel cell according to any one of claims 1 to 3, further **characterized by** said fastener (19) which passes through said piercing portion (16a, 26a, 36a, 46a, 56a) of said partition plate (18, 28, 38, 58) and fastens said cell films (11) and said separators (12) interposed between said partition plates (18, 28, 38, 58) .

5. Amethod for maintenance of the stacked fuel cell according any one of claims 1 to 3, **characterized in that**:
in order that except for said cell films (11) and said separators (12) between said partition plates (18, 28, 38, 58) having targeted said cell film (11) or separator (12) interposed therebetween, remaining said cell films (11) and separators (12) will be fastened by said fastener (19), said fastener (19) is passed through said piercing portions (16a, 26a, 36a, 46a, 56a) of said partition plates (18, 28, 38, 58) and used for fastening, whereafter said cell films (11) and said separators (12) between said partition plates (18, 28, 38, 58) having said targeted cell film (11) or separator (12) interposed therebetween are detached.

6. The method for maintenance of the stacked fuel cell according to claim 5, **characterized in that**:
in order that said cell films (11) and said separators (12) between said partition plates (18, 28, 38, 58) having said targeted cell film (11) or separator (12) interposed therebetween will be fastened by said fastener (19), said fastener (19) is passed through said piercing portions (16a, 26a, 36a, 46a, 56a) of said partition plates (18, 28, 38, 58) and used for fastening, whereafter said cell films (11) and said separators (12) between said partition plates (18, 28, 38, 58) having said targeted cell film (11) or separator (12) interposed therebetween are detached.
